Europäisches Patentamt

European Patent Office

Office européen des brevets

(11) Publication number: **0 151 525**
**A1**

# EUROPEAN PATENT APPLICATION

(21) Application number: 85300431.5

(22) Date of filing: 23.01.85

(51) Int. Cl.⁴: **F 16 H 37/02**

(30) Priority: 01.02.84 JP 17295/84

(43) Date of publication of application:
14.08.85 Bulletin 85/33

(84) Designated Contracting States:
CH DE FR GB IT LI NL

(71) Applicant: FUJI JUKOGYO KABUSHIKI KAISHA
7-2 Nishishinjuku 1-chome Shinjuku-ku
Tokyo(JP)

(72) Inventor: Makishita, Sadao
725 Nobe
Akikawa-shi Tokyo(JP)

(74) Representative: Eyles, Christopher Thomas et al,
BATCHELLOR, KIRK & EYLES 2 Pear Tree Court
Farringdon Road
London, EC1R 0DS(GB)

(54) Infinitely variable transmission.

(57) An infinitely variable belt-drive transmission for a vehicle having an electromagnetic clutch. The transmission has a forward drive gear train and a reverse drive gear train which are disposed between a drive gear connected to the clutch and a main shaft of the transmission. A forward synchronizer and a reverse synchronizer are provided to operatively connect the forward drive gear train and reverse drive gear train with the main shaft, respectively.

EP 0 151 525 A1

./...

Croydon Printing Company Ltd.

FIG. 1

HYDRAULIC
CONTROL
CIRCUIT

## Infinitely variable transmission

The present invention relates to an infinitely variable transmission, and more particularly to a selector device for selecting a forward drive gear and a reverse drive gear in an infinitely variable belt-drive transmission.

An infinitely variable belt-drive transmission connected to a crankshaft of an engine through an electromagnetic clutch is known. The applicant has proposed an infinitely variable belt-drive transmission with an electromagnetic clutch, in which a selector device is provided between a driven member of the electromagnetic clutch and a main shaft of the transmission, in order to reduce the inertial mass of a synchronized member at a synchronizer provided for a forward drive gear train in the selector device.

On the other hand, a coil for magnetizing the electromagnetic clutch is provided in a driven member so as to increase the mass of the driven member, thereby increasing the clutch engaging force. However, such an arrangement of the clutch causes an increase of the inertial mass in a power transmitting system comprising the driven member and a reverse drive gear train to be connected to the driven member. Accordingly, the power transmitting system continues to rotate after disengagement of the clutch.

**0151525**

Therefore, it is difficult to engage the reverse drive gear train with the driven member and gear noises generate when engaging gears.

The present invention seeks to provide an infinitely variable transmission which may make engaging of reverse gears much easier without generating gear engage noises.

To this end, in the infinitely variable transmission, a synchronizer is provided for engaging a reverse drive gear train with a main shaft of the transmission.

According to the present invention, there is provided an infinitely variable belt-drive transmission for a vehicle, having a clutch for transmitting engine power to wheels of the vehicle, a drive pulley, a driven pulley and a belt engaged with both the pulleys. The transmission comprises an input shaft connected to a driven member of the clutch, a main shaft connected to the drive pulley, a drive gear secured to the input shaft, a reverse driven gear rotatably mounted on the main shaft, a forward drive gear train provided between the drive gear and the main shaft, a reverse drive gear train provided between the drive gear and the reverse driven gear, a forward synchronizer for engaging the forward drive gear train with the main shaft, and a reverse synchronizer for engaging the reverse driven gear with the main shaft.

In an aspect of the present invention, the forward drive gear train comprises the drive gear, the forward synchronizer and the main shaft, and the reverse drive gear train comprises the drive gear, a counter gear, an intermediate gear, the reverse driven gear, which are engaged with each other, and the reverse synchronizer and the main shaft.

Other features of this invention will become apparent from the following description of one embodiment with reference to the accompanying drawings, wherein:

Fig. 1 is a sectional schematic view of an embodiment of the present invention;

Fig. 2 is a sectional development view of a selector device according to the present invention; and

Figs. 3a to 3c are illustrations for explaining the operation of a synchronizer.

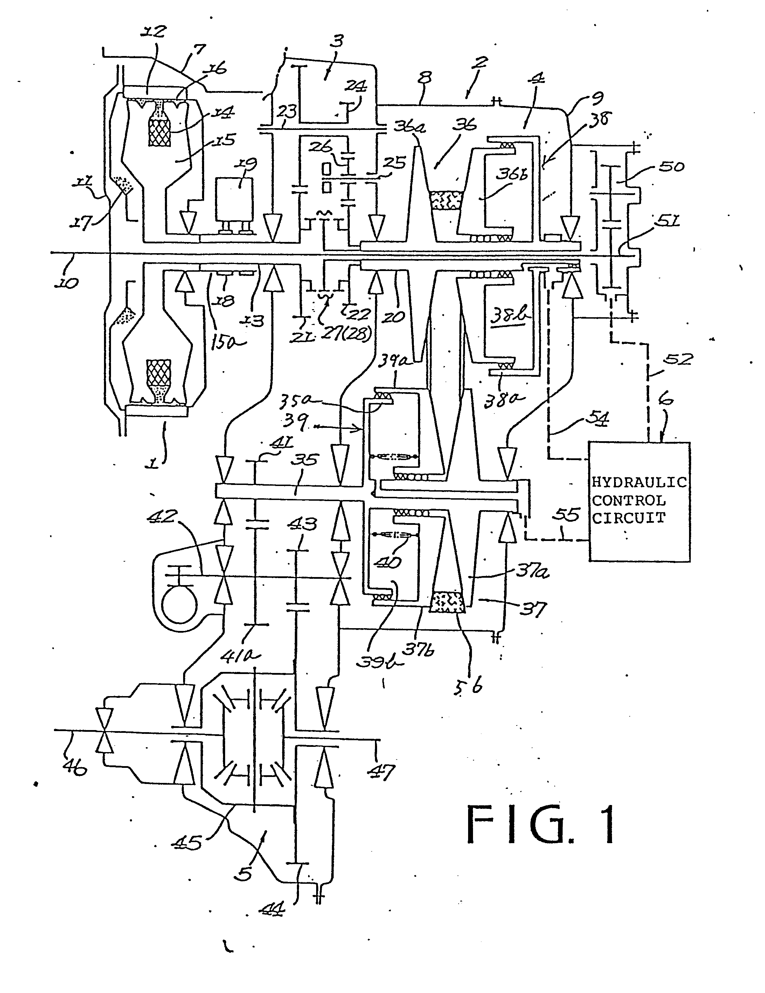

Referring to Fig. 1, an infinitely variable belt-drive automatic transmission for a vehicle according to the present invention comprises an electromagnetic powder clutch 1, an infinitely variable belt-drive transmission 2, a selector device 3, pulleys and belt device 4, final reduction device 5, and pressure oil control circuit 6. The electromagnetic powder clutch 1 is provided in a housing 7, and the selector device 3 and pulleys and belt device 4 are provided in a main housing 8 and a side housing 9.  A
crankshaft 10 of an engine (not shown) is connected to an
annular drive member 12 through a drive plate 11 of the
electromagnetic powder clutch 1.  The electromagnetic powder
clutch comprises a driven member 15, a coil 14 being provided in
the driven member 15 at a periphery thereof.   The driven
member 15 has its outer periphery spaced from the inner
periphery of the drive member 12 by a gap 16, and a powder
chamber 17 is defined between the drive member 12 and driven
member 15.  In the powder chamber 17, powder of magnetic
material is provided.  The driven member 15 is secured to an
input shaft 13 of the belt-drive transmission.  A holder 15a
secured to the driven member 15 carries slip rings 18 which
are electrically connected to the coil 14.  The coil 14 is
supplied through brushes 19 and slip rings 18 with current
from a control circuit for the electromagnetic powder
clutch.

When the magnetizing coil 14 is excited by a clutch
current, driven member 15 is magnetized to produce a
magnetic flux passing through the drive member 12.  The
magnetic powder is aggregated in the gap 16 by the magnetic
flux and the driven member 15 is engaged with the drive
member 12 by the powder.  On the other hand, when the clutch
current is cut off, the drive and driven members 12 and 15
are disengaged from one another.

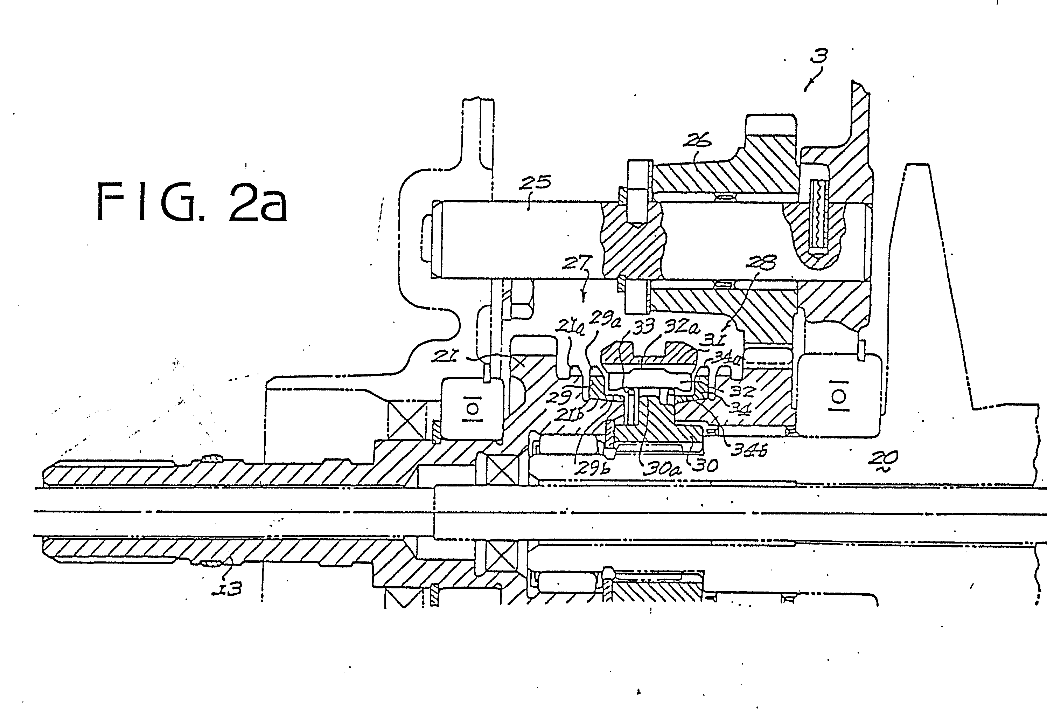

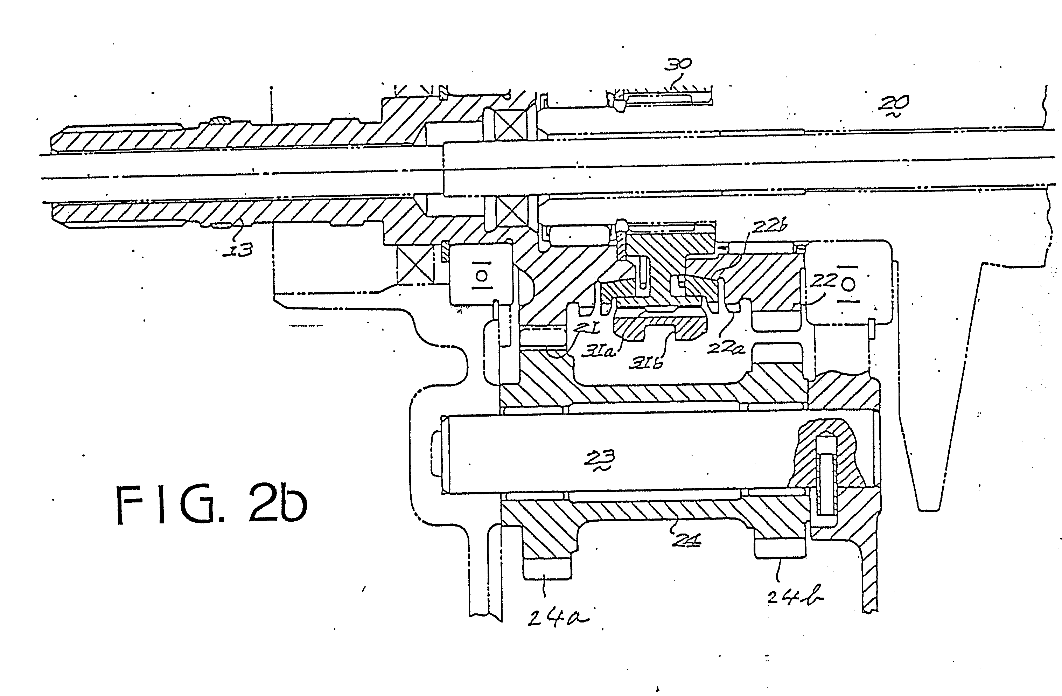

In the belt-drive transmission 2, the selector device 3 is provided between the input shaft 13 and a main shaft 20. The main shaft 20 is cylindrical and is disposed coaxially with the input shaft 13. Referring to Fig. 2, the selector device 3 comprises a drive gear 21 integral with input shaft 13 and a reverse driven gear 22 is rotatably mounted on the main shaft 20. Between the gears 21 and 22, a forward synchronizer 27 and a reverse synchronizer 28 are provided. The drive gear 21 meshes with a gear 24a of a counter gear 24 rotatably mounted on a shaft 23. Another gear 24b of the counter gear meshes with an idler gear 26 which in turn engages with the driven gear 22. The idler gear 26 is rotatably mounted on a shaft 25.

The forward and reverse synchronizers 27 and 28 are formed in symmetrical construction as well known. The drive gear 21 has splines 21a and synchronizing cones 21b on which a synchronizer ring 29 having external teeth 29a is mounted. Secured to the main shaft 20 with a spline is a common drum 30 on which a synchronizer sleeve 31 is axially slidably mounted by keys 32. The keys 32 are engaged with grooves 30a formed in the drum 30 and urged by a spring 33 to grooves 31a of the sleeve 31 so that a projection 32a of each key 32 engages with the groove 31. A shift fork (not shown) is engaged with a groove 31b formed on the periphery of the sleeve 31.

The reverse synchronizer 28, which is the same as the forward synchronizer 27, has splines 22a, synchronizing cones 22b, and a synchronizer ring 34 having external teeth 34a. Both ends of each key 32 engage with grooves 29b and 34b formed on the rings 29 and 34. However, the width of each groove is larger than the key, thereby permitting each ring to angularly shift at synchronization.

Referring to Fig. 1, the main shaft 20 has an axial hole in which is mounted an oil pump driving shaft 51 connected to crankshaft 10. An output shaft 35 is provided in parallel with the main shaft 20. A drive pulley 36 and a driven pulley 37 are mounted on shafts 20 and 35. An axially fixed conical disc 36a of the drive pulley 36 is secured to main shaft 20 and an axially movable conical disc 36b is axially slidably mounted the main shaft 20. The movable conical disc 36b also slides in a cylinder 38a secured to the main shaft 20 to form a hydraulic servo device 38. A chamber 38b of the hydraulic servo device 38 communicates with an oil pump 50 through a passage 54, the pressure oil control circuit 6, and a passage 52. The oil pump 50 is driven by the shaft 51.

A fixed conical disc 37a of the driven pulley 37 is formed on the output shaft 35 opposite the movable disc 36b and a movable conical disc 37b is slidably mounted on the shaft 35 opposite disc 36a. Movable conical disc 37b has a cylindrical portion 39a in which a cylindrical portion 35a of the output shaft 35 is slidably engaged to form a hydraulic servo device 39. A chamber 39b of the hydraulic servo device 39 is communicated with the oil pump 50 through a passage 55 and pressure oil control circuit 6 and passage 52. Springs 40 are provided in the chamber 39b to urge the movable conical disc 37b to the disc 37a so as to reduce the space between both discs. A drive belt 56 engages with the drive pulley 36 and the driven pulley 37.

Secured to the output shaft 35 is a drive gear 41 which engages with an intermediate reduction gear 41a on an intermediate shaft 42. An intermediate gear 43 secured to shaft 42 engages with a final gear 44. Rotation of the final gear 44 is transmitted to axles 46 and 47 of the vehicle driving wheels through a differential 45.

The pressure oil control circuit 6 is responsive to vehicle speed, engine speed and throttle valve position for controlling the pressure oil supply to chambers 38b and 39b, thereby to move discs 36b and 37b. Thus, transmission ratio is infinitely changed.

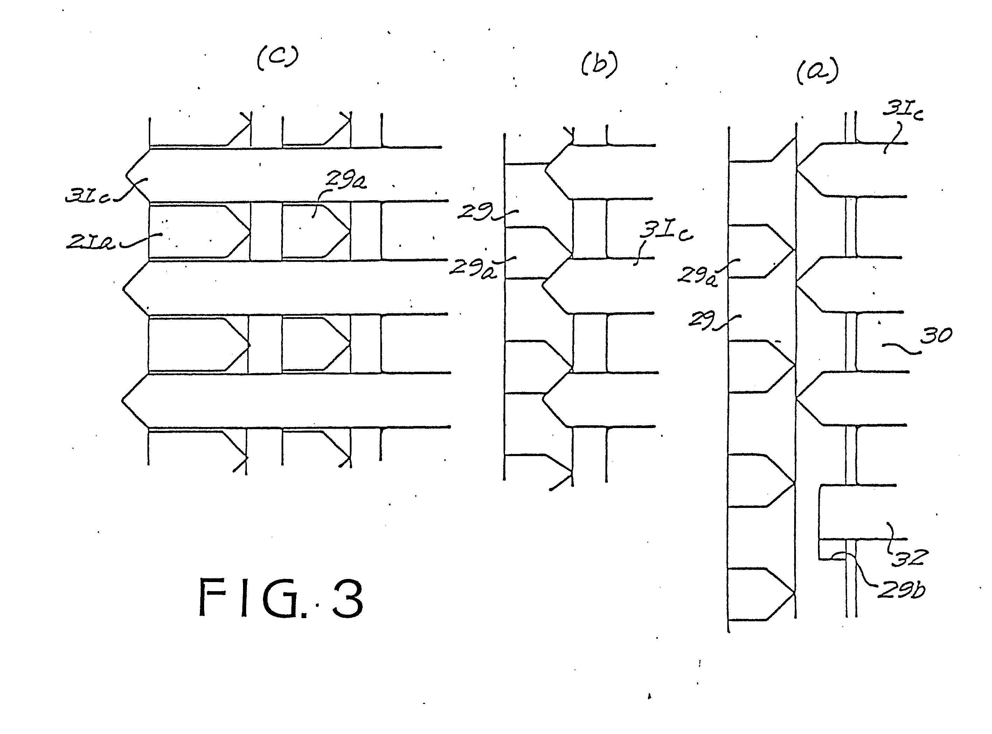

Describing the operation of the selector device 3 with reference to Figs. 2 and 3, at the neutral position where the sleeve 31 is not engaged with teeth 29a of synchronizer ring 29 as shown in Fig. 3(a), the power of the engine is not transmitted to the main shaft 20. When the sleeve 31 is shifted to the left, the keys 32 are also shifted to the left, so that the keys push the synchronizer ring 29 against the cones 21b of the drive gear 21. Accordingly, the synchronizer ring 29 is rotated by the drive gear 21 within the groove 29b. At that time, internal sleeve 31c of the sleeve 31 are positioned in staggered relation with external sleeve 29a of the ring 29 as shown in Fig. 3(a). When the sleeve 31 is further shifted, the projection 32a of each key 32 disengages from the groove 31a, because the key is stopped by the synchronizer·ring 29. Thus, only sleeve 31 is shifted to the left, so that tapered portions of internal teeth 31c of the sleeve 31 engage with tapered portions of external teeth 29a of the ring 29 as shown in Fig. 3(b).

When the sleeve 31 is further shifted, the synchronizer ring 29 is rotated by component at the tapered portions and the gear 21 is also rotated by component at tapered portions of splines 21. Thus, the gear 21 is engaged with the sleeve 31 as shown in Fig. 3(c). When the electromagnetic clutch 1 is engaged, the power of the engine is transmitted to the wheels of the vehicle through the forward drive gear train comprising gear 21, sleeve 31, drum 30 and the main shaft 20.

For the reverse driving, the sleeve 31 is shifted to the right, so that the sleeve engages with the reverse driven gear 22 in the same manner as the operation for the forward drive gear train. Thus, the reverse drive gear train comprising gears 21, 24a, 24b, 26, 22, sleeve 31, drum 30 and main shaft 20 is established. Since inertial mass in the system for the reverse train comprising the driven member 15, and gears 21, 24a, 24b, 26 and 22 is large, the system may continue to rotate after disengagement of the electromagnetic clutch.  However, the system is immediately synchronized with the main shaft 20 by the reverse synchronizer 28 and the engagement of the reverse gear train can be smoothly performed.

While the presently referred embodiment of the present invention has been shown and described, it is to be understood that this disclosure is for the purpose of illustration and that various changes and modifications may be made without departing from the spirit and scope of the invention as set forth in the appended claim.

CLAIMS:

1.      An infinitely variable belt-drive transmission for a vehicle, having a clutch for transmitting engine power to wheels of the vehicle, a drive pulley, a driven pulley, and a belt engaged with both the pulleys, characterised in that the transmission comprises:

an input shaft (13) connected to a driven member (15) of the clutch (1);

a main shaft (20) connected to the drive pulley (36);

a drive gear (21) secured to the input shaft (13);

a reverse driven gear (22) rotatably mounted on the main shaft (20);

a forward drive gear train provided between the drive gear (21) and the main shaft (20);

a reverse drive gear train provided between the drive gear (21) and the reverse driven gear (22);

a forward synchronizer (27) for engaging the forward drive gear train with the main shaft (20); and

a reverse synchronizer (28) for engaging the reverse driven gear (22) with the main shaft (20).

2.      The infinitely variable belt-drive transmission according to claim 1 wherein the forward synchronizer (27) and reverse synchronizer (28) are symmetrically constructed.

3.      The infinitely variable belt-drive transmission according to claim 1 or 2 wherein a common drum (30) for the forward (27) and reverse synchronizer (28) is mounted on the main shaft (20).

4.      The infinitely variable belt-drive transmission according to claim 1, 2 or 3 wherein the forward drive gear train comprises the drive gear (21), the forward synchronizer (27) and the main shaft (20).

5. The infinitely variable belt-drive transmission according to any one of claim 1 to 4 wherein the reverse drive gear train comprises the drive gear (21), a counter gear (24), an intermediate gear (26), the reverse driven gear (22), which are engaged with each other, and the reverse synchronizer (28), and the main shaft (20).

FIG. 1

HYDRAULIC CONTROL CIRCUIT

FIG. 2a

FIG. 2b

0151525

(a)

(b)

(c)

FIG. 3

## EUROPEAN SEARCH REPORT

**0151525**
. Application number

European Patent
Office

EP 85 30 0431

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | EP-A-0 086 534 (VAN DOORNE'S)<br><br>* Whole document * | 1,2,4, 5 | F 16 H 37/02 |
| Y | GB-A-2 086 999 (YANMAR)<br>* Whole document * | 1-3 | |
| A | EP-A-0 096 012 (FIAT)<br>* Whole document * | 1-4 | |
| A | DE-A-2 758 905 (BOSCH) | | |
| A | DE-A-3 220 149 (VOLKSWAGEN) | | |

| TECHNICAL FIELDS SEARCHED (Int. Cl.4) |
|---|
| F 16 H   37/00<br>F 16 H    3/00<br>F 16 H    9/00 |

The present search report has been drawn up for all claims

| Place of search<br>THE HAGUE | Date of completion of the search<br>26-04-1985 | Examiner<br>FLORES E. |
|---|---|---|